# EUROPEAN PATENT APPLICATION

(11) **EP 1 669 693 A1**
(43) Date of publication of application: **14.06.2006**
(21) Application number: 04029034.8
(22) Date of filing: 08.12.2004
(51) Int. Cl.: F24J 2/24, F24J 2/46

(54) **Solar collector with freezing-proof device**

(71) Applicant: Transen Industria e Commercio LtdA., 16200-004 Birigui, Sao Paulo (BR)
(72) Inventor: Dos Santos Pinto, Luiz Antonio, 16200-106 Birigui Sao Paulo (BR)
(74) Representative: Fernandez Lerroux, Aurelio

(57) **Abstract**

Solar collector with freezing-proof device, constructed and mounted with aluminium, copper and glass elements, and formed by a set of elevation tubes (2), connected to the feeding tube (manifold) (3), forming a copper coil, having included an absorption effect chamber of the fluid volume increase when frozen, made of malleable material in a tube shape (1) located in the inner of the usual pipeline (2), that assimilates all the temperature variations.

## Description

The present specification refers itself to a Patent of invention related to totally new collector with freezing-proof device, to be used mainly in solar collector systems, which is not knew within the state of the art and provides a full novelty, mainly because in its manufacture conception, it is endowed internally with a retraction chamber, practical and extremely functional under normal work conditions, projected and developed in order to offer to the user many advantages and benefits, also in situations of low temperatures.

Solar collectors, or collectors used in any other fields, are subject to damage due to the expansion by freezing of water within the collector .

The present invention provides means to avoid the above mentioned damages.

There are different methods to protect collectors from freezing, such as use of anti-freezing solutions, draining the collectors, or warming the water located within the collectors.

However, all of them have certain disadvantages; anti-freezing solutions require a twin water circuit for security reasons, in order to avoid the water to be contaminated by anti-freezing solutions; draining the collectors requires a control system and it reduces the effectiveness of the collectors; warming the water within the collectors requires also control systems, and energy which finally derives in a lack of effectiveness.

In accordance with the present invention, the solar collector with freezing-proof device was conceived and dimensioned specially having regard situations of smooth and low temperature changes which normally compromise the equipment structure.

The solar collector with freezing-proof device is provided with a retraction chamber which avoid the damages produced by freezing of water within the collector allowing it to remain with its operative conditions totally available.

The solar collector with freezing-proof device does not require control systems, nor anti-freezing solutions, and provides high effectiveness at a very low cost.

It has aluminium, copper and glass elements in its mounting construction and the chamber with an absorption effect is made of malleable material in a tube shape, located in the copper pipeline that usually has its mechanical resistance affected when water is fluidized with in low temperatures under a freezing process.

In fact this is a solar collector extremely functional having elements with the basic function of allowing operations under all temperature variations, and in its conception can reach all the efficiency objectives being offered in many sizes/capacities and conclusively with this characteristic of assimilation of temperature variations by means of the malleable absorption chamber in a tube shape, it is constituted of a well-made device achieving in all ways its proposition of necessity and efficiency.

Moreover, it can be used in other fields where collectors are subject to damages by freezing of water within them.

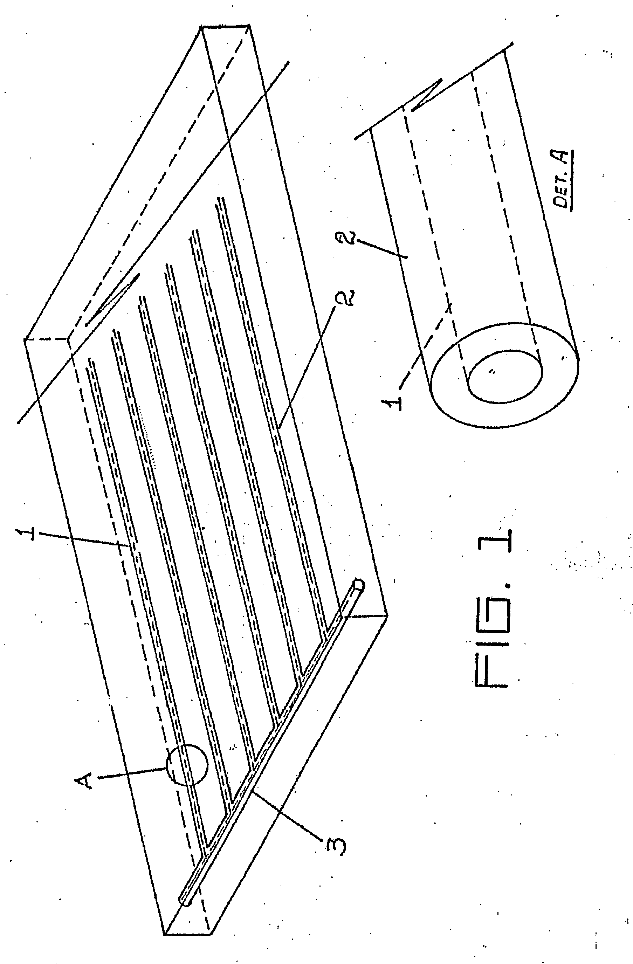

In order to have a clear view of the conception of the solar collector with freezing-proof device in question, it is represented in perspective and in schematic form on the attached and illustrative design (figure 1) to which references are made to a better understanding of what is being proposed.

As it is disclosed from this illustration, the solar collector with freezing-proof device object of this patent, is formed by a set of elevation tubes made of copper (2), connected to the feeding tube (manifold) also made of copper (3), forming a copper coil with an absorption chamber made of malleable material in a tube shape (1) located in the inner of the usual pipeline (2), which purpose is to absorb the increase of the fluid volume when frozen.

When the temperature lows, and is close to freeze, water, or other liquids within a collector fludified and the volume grows, but the increase of the fluid volume does not damage the collector due to the fact that it is absorbed by the absorption chamber within the collector.

The present system can be used in galleries, ducts, hydraulic installations, etc., and with various fluids.

So, that the present collector with freezing-proof device absolutely satisfies the proposed objectives, providing a series of advantages inherent to its applicability, revesting itself of new and proper characteristics endowed with fundamental requisites of novelty.

## Claims

1. Solar collector with freezing-proof device, constructed and mounted with aluminium, copper and glass elements, and formed by a set of elevation tubes (2), connected to the feeding tube (manifold) (3), forming a copper coil, **characterized by** having included an absorption effect chamber which absorbs the increase of the fluid volume produced by freezing, made of malleable material and having a tube shape (1) located in the inner of the usual pipeline (2), that assimilates all the temperature variations.
